# EUROPEAN PATENT APPLICATION

(11) **EP 3 785 872 A1**
(43) Date of publication of application: **03.03.2021**
(21) Application number: 19792708.0
(22) Date of filing: 04.04.2019
(51) Int. Cl.: B28D 5/00, B28D 7/00, C03B 33/027

(54) **SCRIBING DEVICE**

(30) Priority: 27.04.2018 JP 2018086939
(71) Applicant: Mitsuboshi Diamond Industrial Co., Ltd., Settsu Osaka 566-0034 (JP)
(72) Inventor: OKUDA Osamu, Settsu city, Osaka 5660034 (JP)
(74) Representative: TBK
(86) International application number: PCT/JP2019/014970
(87) International publication number: WO 2019/208145

(57) **Abstract**

A scribe apparatus capable of further improving productivity, tool compatibility, and fool-proof functionality is provided.

A scribe apparatus (1) of the present invention has mount means (3) where a brittle material substrate (2) is mounted, a scribe head (7) provided so as to be opposed to the brittle material substrate (2) on the mount means (3), a holder joint (19) provided at a tip of the scribe head (7), a scribing tool (8) removably attached to the holder joint (19) and including a scribing wheel (9) which forms a scribe line on the brittle material substrate (2) on the mount means (3), and a tool change mechanism (30) which performs tool replacement by removing the scribing tool (8) after use from the holder joint (19) and attaching another scribing tool (8) to the holder joint (19), wherein the tool change mechanism (30) has a cartridge (31) having a plurality of said scribing tools (8) accommodated therein.

## Description

### Technical Field

The present invention relates to a scribe apparatus for scribing a brittle material substrate and, in particular, to a tool change mechanism for replacing a scribing tool.

### Background Art

Conventionally, in a flat panel display and so forth such as a liquid-crystal display panel and a liquid-crystal projector substrate, a mother glass substrate is laminated in a manufacturing process, and is then divided into a single panel of a predetermined size.

To divide this brittle material substrate such as a mother glass substrate, a scribe process of forming a scribe line (vertical crack) in that substrate and a break process of causing the vertical crack to completely penetrate are preformed. Of these, in the scribe process, a scribe apparatus is used.

In this scribe apparatus, a scribing tool using a scribing wheel or diamond point is provided. By that scribing tool, a vertical crack is formed on the brittle material substrate.

As a technique regrading a scribe apparatus for scribing a brittle material substrate, there is, for example, one disclosed in PTL 1.

PTL 1 has an object as follows. By using a chip holder (scribing tool) integrated with a chip (such as a scribing wheel), offset data is retained in the chip holder in code form, thereby solving problems such as, for example, burdens of operations of correcting an offset amount, erroneous attachment of a chip of a different type, and the occurrence of variability of the formation position of a scribe line.

Specifically, the chip is rotatably attached to the chip holder. The chip holder is configured to have a cylindrical shape, with its tip provided with an attachment part. An opening is provided to a holder joint, and the chip holder is absorbed by a magnet for attachment, thereby facilitating attachment and detachment. Also, on a surface of the chip holder, offset data of the chip is recorded as a two-dimensional code. At the time of replacing the chip holder, the offset data is read and inputted to the scribe apparatus, thereby cancelling an offset. This omits operation required in association with correction when the chip holder is attached or detached, thereby allowing chip replacement while the apparatus is stopped for a short period of time.

### Citation List

### Patent Literature

PTL 1: Domestic Re-publication of PCT International Publication for Patent Application No. 2007-063979

### Summary of Invention

### Technical Problem

The scribe apparatus disclosed in PTL 1 has solved the above-described problems, and has gained popularity as an apparatus easy to use for a person skilled in the art.

However, requirements for the scribe apparatus are increasing year after year. For example, automatically replacing a scribing tool during operation to extend continuous operating time, reducing automatic replacement time to a short period of time to enhance productivity, and so forth are demanded.

Specifically, as for productivity, improvements for further enhancing productivity have been demanded, such as reduction in time taken for automatic replacement of a scribing tool, reduction in time for setting a cartridge where the scribing tool is accommodated, and extension of the length of the continuous operating time of the scribe apparatus when scribing tools are fully mounted on the cartridge.

Also, as for tool compatibility, improvements for further enhancing tool compatibility have been demanded, such as making, in addition to a scribing tool set as a standard and a scribe head having that scribing tool attached thereto, other scribing tools and scribe heads also available, and supporting also a tilted scribe head.

Also, as for fool-proof functionality (designing in consideration of safety so as not to let an operator perform erroneous operation or not to cause a hazardous situation even if a user performs erroneous operation), improvements for further enhancing fool-proof functionality have been demanded, such as, ensuring safety in the scribe apparatus when the cartridge is prepared and the cartridge is attached or detached, improvement in reliability at the time of automatic scribing tool replacement operation, and recognition that a predetermined scribing tool is attached to allow correct operation.

Thus, in view of the above-described problems, an object of the present invention is to provide a scribe apparatus capable of further improving productivity, tool compatibility, and fool-proof functionality.

### Solution to Problem

To achieve the above-described object, the following technical measures are taken in the present invention.

The scribe apparatus according to the present invention has mount means where a brittle material substrate is mounted, a scribe head provided so as to be opposed to the brittle material substrate on the mount means, a holder joint provided at a tip of the scribe head, a scribing tool removably attached to the holder joint and including a scribing wheel which forms a scribe line on the brittle material substrate on the mount means, and a tool change mechanism which performs tool replacement by removing the scribing tool after use from the holder joint and attaching another scribing tool to the holder joint, wherein the tool change mechanism has a cartridge having a plurality of said scribing tools accommodated therein.

Preferably, the cartridge is removably arranged on a side of the mount means and is fixed with fastening hardware when attached.

Preferably, the cartridge has a plurality of hole parts formed therein, and the hole parts are set as accommodating parts for accommodating the scribing tools.

Preferably, at least one of the plurality of said formed accommodating parts is set to be in a vacant state.

Preferably, a check member which checks whether a replacement position of the scribing tool is correct is provided at each of one end and another end of the plurality of said formed accommodating parts.

Preferably, an upper surface of the check member and an upper surface of the scribing tool are arranged so as to be flush with each other.

Preferably, a check surface for checking whether the replacement position of the scribing tool is correct is provided on an upper part of the check member.

Preferably, when the check surface is a surface oriented to a direction equal to a surface provided to the scribing tool, it is checked to be sure that the replacement position of the scribing tool is correct.

Preferably, a concave part for checking an attachment state of the cartridge is formed on the upper surface of the check member.

Preferably, the cartridge is arranged so that the upper surface of the accommodated scribing tool and an upper surface of the mount means are on a same plane.

### Advantageous Effects of Invention

According to the present invention, productivity, tool compatibility, and fool-proof functionality can be further improved.

### Brief Description of Drawings

FIG. 1 is a perspective view schematically depicting a general outline of a scribe apparatus of the present invention.
FIG. 2 is a side view of the scribe apparatus viewed from an A direction (y-axis direction).
FIG. 3 is a B-B cross-sectional view of the scribe apparatus.
FIG. 4 is a side view schematically depicting a general outline of a scribe head (enlarged C part).
FIG. 5 is a perspective view schematically depicting a general outline of a cartridge for accommodating scribing tools.
FIG. 6 depicts a plan view, a side view, a D-D cross-sectional view, and an E-E cross-sectional view of the cartridge.

### Description of Embodiment

In the following, an embodiment of a scribe apparatus 1 according to the present invention is described with reference to the drawings.

Note that the embodiment described below is one example embodying the present invention and this specific example does not limit the structure of the present invention. Also, as for the drawings, for the purpose of viewability, components are rendered as being partially omitted. Furthermore, an x-axis direction, a y-axis direction, a z-axis direction, and so forth in the scribe apparatus 1 are as depicted in the drawings.

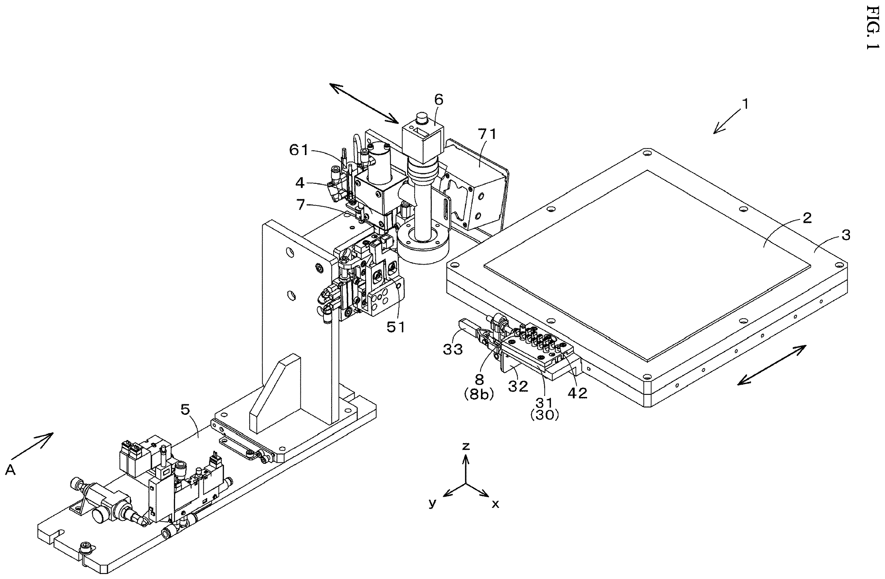

FIG. 1 to FIG. 3 are schematic diagrams of the scribe apparatus 1 according to the present invention.

The scribe apparatus 1 according to the present invention has a table (mount means) 3 where a brittle material substrate 2 is mounted, a head unit 4 which forms a scribe line (vertical crack) on the surface of the brittle material substrate 2, and a block body 5 where a remover 51 and so forth are arranged.

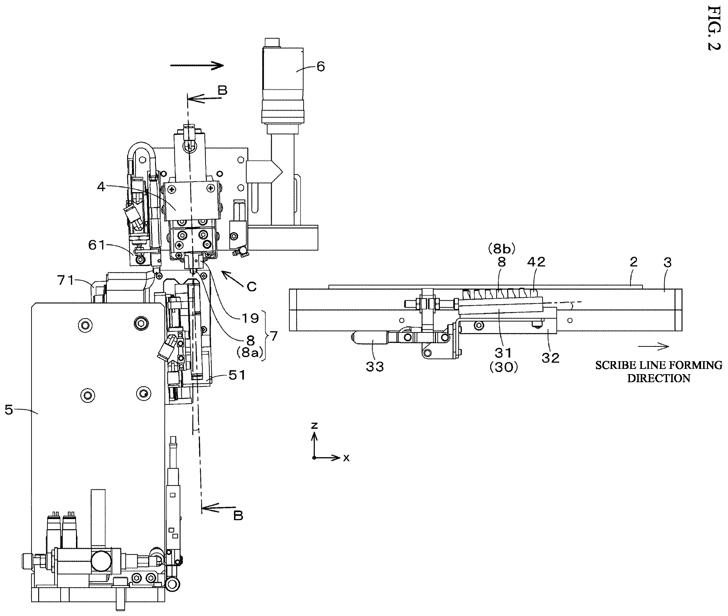

Note that a direction of forming a scribe line is the x-axis direction from the left side to the right side in FIG. 2.

The table 3 is supported from below by a supporting part (not depicted) with a motor incorporated therein. The supporting part is mounted on a movable carriage. The movable carriage (not depicted) is held so as to be movable along paired guide rails (not depicted) to the y-axis direction. This movable carriage is screwed with a ball screw (not depicted) and, with the ball screw rotating by driving of the motor, moves along the guide rails to the y-axis direction.

The motor (not depicted) in the supporting part is to rotate the table 3 on an x-y plane for positioning at a predetermined angle. The brittle material substrate 2 mounted on the table 3 is held by a vacuum suction means (not depicted) or the like. Also, a camera 6 for taking an image of an alignment mark on the brittle material substrate 2 is provided to an upper part of the head unit 4.

In the scribe apparatus 1, a beam (not depicted) is laid by a pole (not depicted) along the x-axis direction so as to go across the movable carriage and the table 3 thereabove.

The head unit 4 can move to the x-axis direction along a guide (not depicted) provided to the beam by driving of the motor. At a tip part of the head unit 4, a scribe head 7 is attached. Furthermore, the head unit 4 can also move to the z-axis direction.

As depicted in FIG. 2, the head unit 4 is placed as being tilted so as to slightly fall down into the direction of forming a scribe line. In the present embodiment, the head unit 4 is placed as being tilted rearward by 2° with respect to the direction of forming a scribe line (traveling direction).

The scribe head 7 has a scribing tool 8 which forms a scribe line on the surface of the brittle material substrate 2 and a holder joint 19 which removably holds the scribing tool 8. Furthermore, separately from the movement of the entire head unit 4 to the z-axis direction, the scribe head 7 itself can also move to the z-axis direction.

This scribe head 7 is also placed as being tilted so as to slightly fall down into the direction of forming a scribe line (left side→right side in FIG. 2, the x-axis direction). In the present embodiment, the scribe head 7 is placed as being tilted rearward by 2° with respect to the direction of forming a scribe line.

Here, a y-axis moving part which moves the table 3 to the y-axis direction is formed of the paired guide rails which guide the movable carriage, the ball screw screwed into the movable carriage, and the motor which rotates the ball screw.

Also, an x-axis moving part which moves the head unit 4 to the x-axis direction is formed of the beam going across and above the table 3, a pole supporting the beam, and the guide which guides the head unit 4. Also, the motor in the supporting part is a rotating part which rotates the table 3.

These y-axis moving part, x-axis moving part, and rotating part configure a relative moving part.

Next, the structure of the scribing tool 8 to be attached to the holder joint 19 is described.

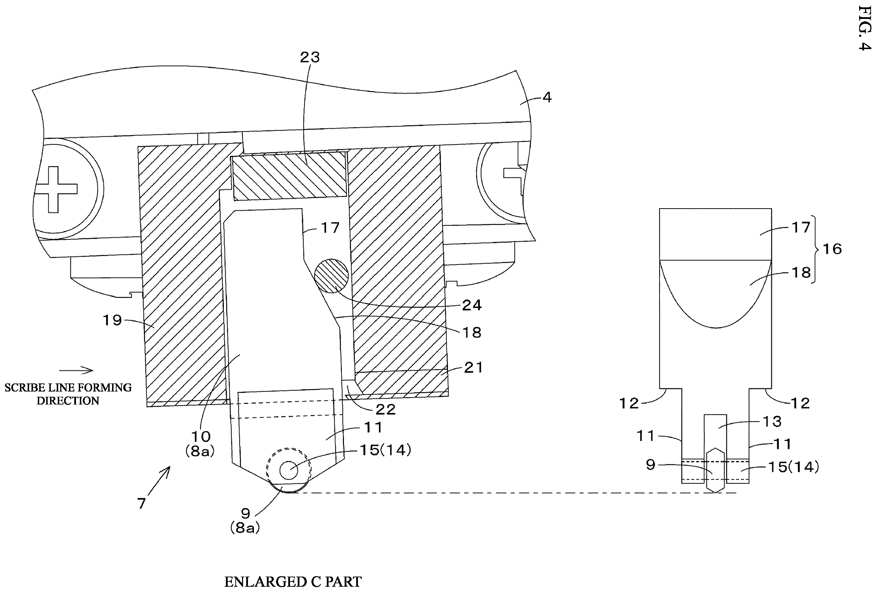

FIG. 4 is a diagram depicting the scribing tool 8 and its attached state. Note in the following description that the scribing tool 8 may be simply referred to as a tool.

The tool 8 has a scribing wheel 9 which forms a scribe line (vertical crack) on the brittle material substrate 2 and a main body part 10 which supports the scribing wheel 9.

Note in the following description that the scribing wheel 9 may be simply referred to as a wheel.

As with the scribe head 7, the tool 8 is also tilted so as to slightly fall down into the direction of forming a scribe line (left side→right side in FIG. 2, the x-axis direction). In the present embodiment, the tool 8 is placed as being tilted rearward by 2° with respect to the direction of forming a scribe line (traveling direction).

With the tool 8 (scribe head 7) placed as being tilted in this manner, a desired scribe line can be formed on the surface of the brittle material substrate 2. Also, shavings at the time of formation of a scribe line can be reduced.

The main body part 10 is a member in a substantially columnar shape, and is provided, on tis one end (tip) side, with vertically-cutout flat side wall surface parts 11. The side wall surface parts 11 are provided in a pair so as to face each other. Above the side wall surface parts 11, a hood part 12 bulging outward in a radial direction is formed. Note that a two-dimensional code, which will be described further below, is printed on either of the side wall surface parts 11.

Between the paired side wall surface parts 11, a notched part 13 parallel to those side wall surface parts 11 is provided.

Also, at each of lower ends of the paired side wall surface parts 11, a pin groove 14 in a direction orthogonal to that surface is provided. Those paired pin grooves 14 face each other and are provided so as to penetrate through the notched part 13. In that notched part 13, the scribing wheel 9 is arranged.

The wheel 9 is a disk-shaped member, has a circumference portion whose cross section is in a triangular shape, and has a through hole at the center. The wheel 9 has a size on the order such that, for example, its diameter is 2.5 mm and its thickness is 0.5 mm.

The wheel 9 is rotatably supported about an axial center of a pin 15 inserted in a hole part with the center of the pin groove 14 and the center of the through hole aligned together.

On the other hand, on the other end (base end) side of the main body part 10, an attachment part 16 for positioning is provided. The attachment part 16 is formed by notching the main body part 10, and has a flat surface 17 and a tilted surface 18.

The flat surface 17 is formed at the base end of the main body part 10, and is set to be a surface in a direction orthogonal to the side wall surface parts 11. The tilted surface 18 is set to be a surface tilted downward from the flat surface 17 to a radially outward direction. These flat surface 17 and tilted surface 18 are provided in sequence.

The main body part 10 has a shape tapered upward from a midway part in the longitudinal direction. Note that the base end (upper part) of the main body part 10 is configured of a magnetic metal.

The wheel 9 and the main body part 10 are integrated in this manner to form the tool 8. That is, the tool 8 integrated by inserting the pin 15 into the pin grooves 14 to rotatably support the wheel 9 is replaced without being removed.

The tool 8 including the wheel 9 is attached to the scribe head 7 and, by a lifting part provided inside the head unit 4, a lifting motion is performed. Note that an example of the lifting part is a ball screw or the like.

By a pressuring mechanism separate from that lifting part, the wheel 9 having a pointed portion is rolled as being in pressure contact with the surface of the brittle material substrate 2 with an appropriate load, thereby forming a scribe line. A cylinder giving a pressure for pushing the tool 8 and means which drives the entire scribe head 7 are separately provided.

Next, the holder joint 19 is described.

The holder joint 19 has an upper part formed of a columnar member and a lower part formed of a cylindrical member. Note that the holder joint 19 is set to be a cylindrical shape with its lower part larger than its upper columnar member.

As with the scribe head 7, the holder joint 19 is also tilted so as to slightly fall down into the direction of forming a scribe line (left side→right side in FIG. 2, the x-axis direction). In the present embodiment, the holder joint 19 is placed as being tilted rearward by 2° with respect to the direction of forming a scribe line.

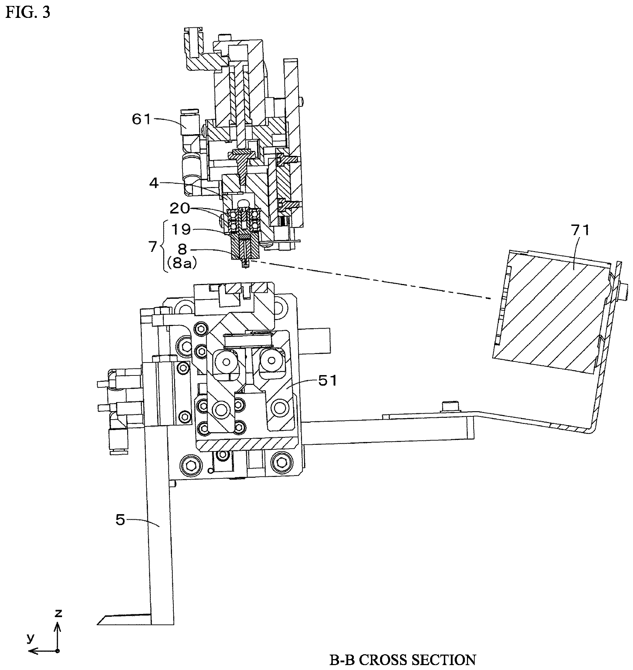

The holder joint 19 has, at its upper part, a bearing 20 attached as fitting therearound and, by that bearing 20, is supported so as to be rotatable about an axial center in a substantially vertical direction (refer to FIG. 3).

The lower part of the holder joint 19 forms a holding part 21 which holds the tool 8, and has a cylindrically-shaped opening 22 formed therein. At an upper end of that opening 22, a magnet 23 is buried.

Also, inside the opening 22, a parallel pin 24 in a direction orthogonal to the center axis is provided at a position away from the center axis. The parallel pin 24 is to position the tool 8 by making contact with the tilted surface 18 of the tool 8, that is, to set the direction of the wheel 9 to a correct direction.

When the tool 8 is attached to the holder joint 19, the tool 8 is inserted from an attachment part 16 side into the opening 22 of the holder joint 19. Then, the tip (base end) side of the tool 8 configured of a magnetic metal is attracted by the magnet 23 to be fixed to the holder joint 19.

Furthermore, the flat surface 17 becomes oriented to a parallel pin 24 side, and the tilted surface 18 makes contact with the parallel pin 24 to be positioned and fixed. That is, since the flat surface 17 and the tilted surface 18 are oriented only to one direction, the direction of wheel 9 is set to be a predetermined direction.

This tool 8 is merely attracted by the magnet 23 and fixed to the holder joint 19, and is thus extremely easily attached and detached. That is, when attached, the tool 8 is attracted and is thereby fixed at a predetermined position and, also when replaced, the tool 8 can be easily detached only by being pulled. The tool 8 can be also manually attached and detached.

The magnet 23 is set to pull the tool 8 when positioned 3 mm to 4 mm back from a final set position of the holder joint 19.

Meanwhile, the scribe apparatus 1 of the present invention has a tool change mechanism 30 which removes the scribing tool 8 after use from the holder joint 19 and attaches another scribing tool 8 to the holder joint 19 to automatically perform tool replacement.

The tool change mechanism 30 has a cartridge 31 where the tool 8 is accommodated, a remover 51 which removes the tool 8 from the holder joint 19, a transfer nozzle 61 which moves the tool 8 between the scribe head 7 and the cartridge 31, and a 2D code reader 71 which reads a two-dimensional code of the tool 8 attached to the scribe head 7 (holder joint 19).

The present invention is characterized in the cartridge 31 included in the scribe apparatus 1.

In the following, the structure of the cartridge 31 is described in detail.

As depicted in FIG. 1 and FIG. 2, the cartridge 31 is a flat-plate-shaped member arranged on a side of the table 3 to accommodate a plurality of tools 8.

In detail, the cartridge 31 is a member attached to a base 32 provided on a side wall surface of the table 3. The base 32 is provided to a side wall surface of the table 3 on an origin side of the head unit 4 in the y-axis direction. Note that the attachment position of the cartridge 31 is not limited to the position (the side wall surface of the table 3) exemplarily depicted in the present embodiment.

The cartridge 31 is placed as being tilted to the left of FIG. 2 in the x-axis direction, in accordance with the tilt of the scribe head 7. In the present embodiment, the cartridge 31 is placed also as being tilted by 2°.

After attached to the base 32, the cartridge 31 is reliably fixed by a clamp 33 included in that base 32 so as not to fall off. That is, the cartridge 31 is removably arranged on the side of the table 3 and is fixed with fastening hardware such as the clamp 33 and a lock member 36 when attached.

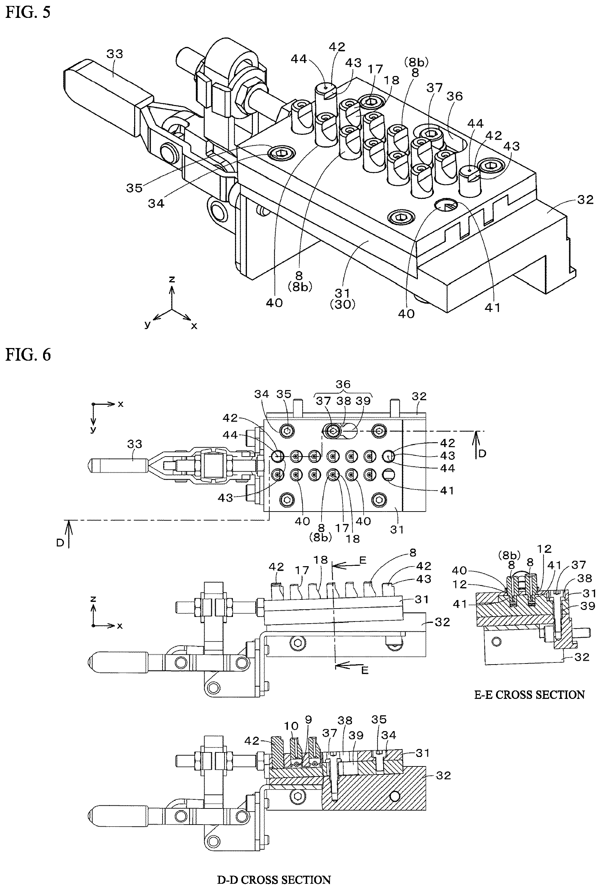

FIG. 5 is a perspective view depicting the structure of the cartridge 31. FIG. 6 depicts a plan view, a side view, a C-C cross-sectional view, and a D-D cross-sectional view depicting the structure of the cartridge 31.

As depicted in FIG. 5 and FIG. 6, the cartridge 31 is a member formed by stacking two rectangular flat plate materials, and has an upper surface where a plurality of hole parts are formed.

As for the size of the cartridge 31, for example, in the present embodiment, the long side is set to be approximately on the order of one third of the side length of the table 3 and the short side is set to be on the order of one-half of the long side. Also, the thickness of the cartridge 31 is set to be thinner than the length of the tool 8 in a vertical direction. Note that the size of this cartridge 31 can be changed as appropriate.

In a planar view, screw holes for fixing two flat plate materials are provided at four corners of the cartridge 31. With screws 35 inserted into those screw holes 34, the two flat plate materials are fastened to become a single flat plate material.

Also in the planar view, a single long hole 36 is formed on one side of the cartridge 31 in the y-axis direction. This long hole 36 serves as a lock member for the cartridge 31, when attached to the base 32, so as not to fall off from the base 32.

In detail, with a guide pin 37 (bolt) provided to the base 32 being inserted into and engaged with the lock member 36, the cartridge 31 is fixed to the base 32. The lock member 36 has an oval-shaped long hole 38 formed in the upper flat plate material and a keyhole-shaped long hole 39 formed in the lower flat plate material.

The oval-shaped long hole 38 is set to have a dimension allowing a head part of the guide pin 37 to be inserted therein.

The keyhole-shaped long hole 39 has only a single portion which the head part of the guide pin 37 can pass through, and the other portions has a size allowing only a body portion of the guide pin 37 to pass through.

That is, the head of the guide pin 37 is let pass through the passable portion of the keyhole-shaped long hole 39 to be inserted into the oval-shaped long hole 38, and then the cartridge 31 is caused to slide to be let pass through the portion of the keyhole-shaped long hole 39 allowing only the body part of the guide pin 37 to pass through, thereby causing the guide pin 37 to be engaged with the lock member 36. Thus, the cartridge 31 is fixed to the base 32.

Furthermore, in the planar view, a plurality of accommodating parts 40 which accommodate the tools 8 for replacement are provided at the center of the cartridge 31. These accommodating parts 40 are provided so as to be aligned along the x-axis direction in the cartridge 31. In the present embodiment, the plurality of accommodating parts 40 are placed in a two-row state.

The accommodating parts 40 are each formed in a bottom-closed cylindrical shape, and its inner peripheral diameter is set to be slightly larger than the outer peripheral diameter of the tool 8. Also, the depth of the accommodating part 40 is preferably such that the attachment part 16 is reliably viewable when the tool 8 is accommodated in the accommodating part 40.

Inside the accommodating part 40, step parts 41 are provided. Each step part 41 is a member bulging from the inner peripheral wall, and a single pair of step parts 41 is provided so that they face each other. The step parts 41 are configured so that the hood part 12 formed above the side wall surface parts 11 can abut on the step parts 41 when the tool 8 is accommodated in the accommodating part 40.

At the time of accommodating the tool 8, with the step parts 41 abutting on the hood part 12 of the tool 8, the tool 8 is in a state of floating in the accommodating part 40, and the wheel 9 does not make contact with the bottom part. Thus, that wheel 9 can be prevented from being damaged.

At both ends (one end and the other end) of the plurality of accommodating parts 40 formed in the x-axis direction, check pins 42 (check members) which check whether the orientation of the tool 8 (replacement position of the tool 8) is correct are provided.

The check pins 42 each have a shape substantially identical to that of the tool 8, and is arranged so that the upper surface is flush with the upper surface of the tool 8. To an upper part of the check pin 42, a check surface 43 is provided. The check surface 43 is parallel to the y-axis direction and is oriented to a direction opposite to the origin of the head unit 4. The check surface 43 is set to be a flat surface substantially similar to the flat surface 17 of the tool 8.

If these two surfaces, the check surface 43 and the flat surface 17, are faces in the same direction, it is possible to easily check by visual inspection that "the replacement position of the tool 8 is correct". On the other hand, if the flat surface 17 is oriented to a direction different from the check surface 43, it is possible to easily check by visual inspection that "the replacement position of the tool 8 is not correct".

At the center of the upper surface of the check pin 42, a concave part 44 is formed. With this concave part 44, by using the camera 6 (imaging apparatus) provided to an upper part of the scribe apparatus 1, a direction of attachment of the cartridge 31, the number of tools 8 accommodated in the cartridge 31, whether the upper surface of the tool 8 accommodated in the cartridge 31 is present on a plane substantially identical to the upper surface of the table 3, and so forth are detected to check whether the attachment state of the cartridge 31 is correct. That is, the concave part 44 is a position detection hole for the cartridge 31, the tool 8, and so forth.

Note that it is preferable in actual operation that the upper surface of the tool 8 accommodated in the cartridge 31 be present on the plane substantially identical to the upper surface of the table 3, and therefore this is taken as a standard.

Note that at least one of the plurality of formed accommodating parts 40 is set to be in a vacant state when attached to the table 3 as accommodating the tool 8. In this vacant accommodating part 40, the tool 8 after use (old tool 8a) is accommodated.

Here, the actuation mode of the tool change mechanism 30 is described.

With the lock member 36 matched with the guide pin 37 to cause the cartridge 31 having the plurality of tools 8 accommodated therein is caused to slide to be set to the base 32 provided to the side of the table 3, and is fixed by the clamp 33.

The remover 51 is caused to ascend to be kept in an open state. The scribe head 7 is moved above the remover 51 and is caused to descend to a position where the remover 51 can pick up the tool 8 (old tool 8a).

By causing the remover 51 to slightly descend, the remover 51 picks up the old tool 8a on the scribe head 7. As in a state of picking up the old tool 8a, the remover 51 is further caused to descend, and the old tool 8a is thereby pulled and removed from the holder joint 19. After removal, the scribe head 7 is moved to another position.

The transfer nozzle 61 is moved above the remover 51. The transfer nozzle 61 is brought closer to the remover 51. Then, the remover 51 is caused to ascend. Then, by vacuum suction of the transfer nozzle 61, the old tool 8a is suctioned into the transfer nozzle 61.

The transfer nozzle 61 holding the old tool 8a is moved above the vacant accommodating part 40 in the cartridge 31. The transfer nozzle 61 is caused to descend to insert and accommodate the old tool 8a into the vacant accommodating part 40, with vacuum suction released.

Next, the transfer nozzle 61 is moved above the new tool 8b and then descend. With vacuum suction of the transfer nozzle 61, the new tool 8b is received from the cartridge 31.

The remover 51 is caused to ascend to be in an open state.

The transfer nozzle 61 holding the new tool 8b is moved above the remover 51. The transfer nozzle 61 is caused to descend and pick up the new tool 8b, which is set to the remover 51. After the end of transfer, the transfer nozzle 61 is caused to ascend to be moved to another position.

The scribe head 7 is moved above the remover 51 holding the new tool 8b, and is caused to slightly descend. The remover 51 is caused to ascend to insert the new tool 8b into the holder joint 19.

The remover 51 is further caused to ascend to release the new tool 8b for attachment to the scribe head 7. The new tool 8b is absorbed by the magnet 23 and positioned by the parallel pin 24.

Note that the new tool 8b may be set in an accommodating part provided near the remover 51. In this case, when the scribe head 7 moves above the accommodating part having the new tool 8b accommodated therein and slightly descends, the accommodating part ascends by a predetermined height, and the new tool 8b is inserted into the holder joint 19. Then, the new tool 8b is absorbed by the magnet 23 to be attached to the holder joint 19.

Meanwhile, with respect to the new tool 8b picked up by the remover 51 or accommodated in the accommodating part, the holder joint 19 is brought close to a position approximately 2.5 mm back from a final set position. Also, in accordance with the tilt of the scribe head 7, the remover 51, the accommodating part, and the transfer nozzle 61 are all tilted by two degrees.

The two-dimensional code printed on the new tool 8b is read by using the 2D code reader 71. From the read data, it is checked whether the tool 8 is correct. If it is correct, the process proceeds to actual operation.

After actual operation, the cartridge 31 having old tools 8a after use all accommodated therein is removed from the base 32 by releasing the clamp 33 and the lock member 36. Then, the cartridge 31 having the new tool 8b accommodated therein is mounted on the base 32 and fixed by the clamp 33 and the lock member 36 for replacement.

As described above, according to the present invention, when the scribing tool 8 is removed for replacement, operation of turning the scribing tool 8 upside down in order to protect the cutting edge (wheel 9) and so forth do not accompany, thereby making it possible to shorten replacement time and extend continuous working time. Also, by using the cartridge 31 of the present invention, attachment error of the cartridge 31 (human error) and so forth can be prevented as much as possible, thereby making it possible to further improve compatibility of the scribing tool 8 and fool-proof functionality.

Note that the embodiment disclosed herein should be considered as being examples in all aspects and not restrictive.

In particular, in the embodiment disclosed herein, what is adopted as matters not clearly stated, for example, actuation conditions, operating conditions, dimensions and weights of structures, and so forth, is those that do not deviate from a range of normal implementation by a person skilled in the art and can be easily set by a normal person skilled in the art.

For example, while a type is exemplarily described in the present embodiment in which the head unit 4 is attached as being tilted by two degrees, there is another type in which the head unit 2 is attached as being oriented toward a vertical direction. Also in this case, the technique of the present application is applicable.

### Reference Signs List

- 1: scribe apparatus
- 2: brittle material substrate
- 3: table (mount means)
- 4: head unit
- 5: block body
- 6: camera
- 7: scribe head
- 8: scribing tool (tool)
- 8a: old tool
- 8b: new tool
- 9: scribing wheel (wheel)
- 10: main body part
- 11: side wall surface part
- 12: hood part
- 13: notched part
- 14: pin groove
- 15: pin
- 16: attachment part
- 17: flat surface
- 18: tilted surface
- 19: holder joint
- 20: bearing
- 21: holding part
- 22: opening
- 23: magnet
- 24: parallel pin
- 30: tool change mechanism
- 31: cartridge
- 32: base
- 33: clamp
- 34: screw hole
- 35: screw
- 36: long hole (lock member)
- 37: guide pin (bolt)
- 38: oval-shaped long hole
- 39: keyhole-shaped long hole
- 40: accommodating part
- 41: step part
- 42: check pin (check member)
- 43: check surface
- 44: concave part (position detection hole)
- 51: remover
- 61: transfer nozzle
- 71: 2D code reader

## Claims

1. A scribe apparatus comprising:
mount means where a brittle material substrate is mounted;
a scribe head provided so as to be opposed to the brittle material substrate on the mount means;
a holder joint provided at a tip of the scribe head;
a scribing tool removably attached to the holder joint and including a scribing wheel which forms a scribe line on the brittle material substrate on the mount means; and
a tool change mechanism which performs tool replacement by removing the scribing tool after use from the holder joint and attaching another scribing tool to the holder joint, wherein
the tool change mechanism has a cartridge having a plurality of said scribing tools accommodated therein.

2. The scribe apparatus according to claim 1, wherein
the cartridge is removably arranged on a side of the mount means and is fixed with fastening hardware when attached.

3. The scribe apparatus according to claim 1 or 2, wherein
the cartridge has a plurality of hole parts formed therein, and
the hole parts are set as accommodating parts for accommodating the scribing tools.

4. The scribe apparatus according to claim 3, wherein
at least one of the plurality of said formed accommodating parts is in a vacant state.

5. The scribe apparatus according to claim 3 or 4, wherein
a check member which checks whether a replacement position of the scribing tool is correct is provided at each of one end and another end of the plurality of said formed accommodating parts.

6. The scribe apparatus according to claim 5, wherein
an upper surface of the check member and an upper surface of the scribing tool are arranged so as to be flush with each other.

7. The scribe apparatus according to claim 5 or 6, wherein
a check surface for checking whether the replacement position of the scribing tool is correct is provided on an upper part of the check member.

8. The scribe apparatus according to claim 7, wherein
when the check surface is a surface oriented to a direction equal to a surface provided to the scribing tool, it is checked to be sure that the replacement position of the scribing tool is correct.

9. The scribe apparatus according to any one of claims 5 to 8, wherein
a concave part for checking an attachment state of the cartridge is formed on the upper surface of the check member.

10. The scribe apparatus according to any one of claims 1 to 9, wherein
the cartridge is arranged so that the upper surface of the accommodated scribing tool and an upper surface of the mount means are on a same plane.
